# EUROPÄISCHE PATENTSCHRIFT

(11) **EP 0 583 610 B1**
(45) Veröffentlichungstag und Bekanntmachung des Hinweises auf die Patenterteilung: **06.12.1995**
(21) Anmeldenummer: 93111182.7
(22) Anmeldetag: 13.07.1993
(51) Int. Cl.: B60K 41/06, B60K 28/16, F16H 61/02

(54) **Verfahren zur Reduzierung des Abtriebsmoments bei Durchdrehneigung der angetriebenen Räder in Kraftfahrzeugen**
Method for reduction of driving torque in motor vehicles when driven wheels tend to slip
Méthode pour la réduction du couple de sortie d'un véhicule automobile au cas ou les roues entrainées ont tendance à patiner

(30) Priorität: 13.08.1992 DE 4226800
(43) Veröffentlichungstag der Anmeldung: 23.02.1994
(73) Patentinhaber: Bayerische Motoren Werke Aktiengesellschaft, 80788 München (DE)
(72) Erfinder: Welter, Andreas, D-80339 München (DE)
(74) Vertreter: Dirscherl, Josef

(56) Entgegenhaltungen:
- EP-A- 0 393 669
- DE-A- 3 435 869
- DE-A- 4 105 100
- DE-U- 9 107 025

## Beschreibung

Die Erfindung betrifft ein Verfahren zur Reduzierung des Abtriebsmoments bei Durchdrehneigung der angetriebenen Räder in Kraftfahrzeugen nach dem Oberbegriff des Patentanspruchs 1.

Aus der DE 34 35 869 A1 ist beispielsweise ein Verfahren zur Reduzierung des Abtriebsmoments bei Kraftfahrzeugen bekannt, bei dem ein Antriebsschlupfregelsystem bei Durchdrehneigung von wenigstens einem angetriebenen Rad das Motormoment reduziert und gleichzeitig zu Beginn der Motormomentreduzierung ein Steuersignal erzeugt, das an das elektronische Steuergerät eines Automatikgetriebes weitergegeben wird. Bei Durchdrehneigung von wenigstens einem angetriebenen Rad wird vom elektronischen Steuergerät des Automatikgetriebes eine Schaltung in den höheren Gang vorgenommen. Diese abtriebsmomentreduzierende Gangwechselsteuerung wird nach dem aus der DE 34 35 869 A1 bekannten Verfahren beendet, wenn der Fahrer durch ein kurzes Durchtreten des Gaspedals (kick-down) eine Rückschaltung wünscht. Ein derartiges Verfahren birgt die Gefahr in sich, daß der abtriebsmomentreduzierende Gang durch eine Rückschaltung verlassen wird, bevor die Ursache behoben ist, aufgrund derer Durchdrehneigung an den angetriebenen Rädern auftrat. Beispielsweise wäre eine Rückschaltung auf Glatteis möglich.

Weiterhin sind Gangwechselsteuerungen bekannt, die beispielsweise über einen vom Fahrer zu bedienenden Programmwahltaster die manuelle Anwahl eines sog. "Winterprogrammes" ermöglichen. Ein derartiges Winterprogramm besteht aus abtriebsmomentreduzierenden Schaltkennlinien, durch die in einem höheren als den ersten Gang angefahren wird und/oder durch die bei niedrigeren Brennkraftmaschinendrehzahlen und Drosselklappenöffnungswinkeln hoch- und rückgeschaltet wird als bei normalen oder sportlichen Schaltkennlinien. Darüber hinaus ist bekannt, abhängig von einem Regelsignal des Antriebsschlupfregelsystems ein derartiges Winterprogramm automatisch anzuwählen. Derartige bekannte Verfahren beenden das Winterprogramm bei Ausbleiben des Antriebsschlupfregelsignals. Dieses Verfahren kann bei häufigem Wechsel zwischen glatter und rauher Fahrbahn zu ständigen Pendelschaltungen führen, wodurch der Komfort stark beeinträchtigt wird.

Es ist Aufgabe der Erfindung, ein Verfahren zur Reduzierung des Abtriebsmoments bei Durchdrehneigung der angetriebenen Räder zu schaffen, das einerseits unkomfortable Pendelschaltungen verhindert und andererseits baldmöglichst abtriebsmomentreduzierende Maßnahmen beendet.

Diese Aufgabe wird durch die Merkmale des Patentanspruchs 1 gelöst.

Wird vom Steuergerät des Automatikgetriebes eine Durchdrehneigung der angetriebenen Räder festgestellt, werden die Gangwechsel solange entsprechend abtriebsmomentreduzierender Schaltkennlinien, z. B. entsprechend der Schaltkennlinien eines Winterprogramms, gesteuert, bis das Kraftfahrzeug nach Ende der Durchdrehneigung eine vorgegebene Wegstrecke ohne erneute Durchdrehneigung zurückgelegt hat. Beginnt während des Durchfahrens der vorgegebenen Wegstrecke eine erneute Durchdrehneigung der angetriebenen Räder sind weiterhin die abtriebsmomentreduzierenden Schaltkennlinien zur Gangwechselsteuerung maßgeblich, bis die gesamte vorgegebene Wegstrecke einmal ohne Durchdrehneigung durchfahren wird.

Tritt innerhalb der vorgegebenen Wegstrecke ein häufiger Wechsel zwischen glatter und rauher Fahrbahn auf, werden durch Beibehaltung der abtriebsmomentreduzierenden Schaltkennlinien Pendelschaltungen vermieden. Darüber hinaus wird das Sicherheitsverhalten des Kraftfahrzeugs erhöht, da z.B. unkontrollierte Rückschaltungen auf Glatteis unterbleiben. Die Gangwechselsteuerung entsprechend der abtriebsmomentreduzierenden Schaltkennlinien wird automatisch wieder beendet, wenn die Sicherheit des Fahrzeugs gewährleistet ist.

Eine vorteilhafte Weiterbildung der Erfindung ist der Gegenstand des Patentanspruchs 2.

Die Länge der vorgegebenen, ohne Durchdrehneigung zu durchfahrenden Wegstrecke hängt umgekehrt proportional von dem auf die angetriebenen Räder wirksamen Abtriebsmoment während des Durchfahrens dieser Wegstrecke ab. Das Abtriebsmoment wird beispielsweise aus dem jeweils eingelegten Gang, aus der Einspritzmenge des Kraftstoffes und aus der Abtriebsdrehzahl berechnet.
Bei Ende der Durchdrehneigung wird vorteilhafterweise eine stets gleiche Grundlänge der ohne Durchdrehneigung zu durchfahrenden Wegstrecke vorgegeben, die abhängig vom Abtriebsmoment während des Durchfahrens dieser Wegstrecke verkürzt oder verlängert werden kann. Beispielsweise kann in konstanten Zeitintervallen vom Wert der Grundlänge ein vom Abtriebsmoment abhängiger Wegstreckendifferenzwert abgezogen werden bis der Wert der Grundlänge zu Null wird.
Die Länge der ohne Durchdrehneigung zu durchfahrenden Wegstrecke muß nicht allein vom Abtriebsmoment, sondern kann auch zusätzlich von anderen Fahrzeugbetriebsgrößen, wie z.B. von der Fahrzeuggeschwindigkeit, abhängen.
Eine derartige Veränderungsmöglichkeit der vorgegebenen Wegstrecke aufgrund von Fahrzeugbetriebsgrößen, die während des Durchfahrens dieser Wegstrecke auf den momentanen Reibwert der Fahrbahn rückschließen lassen, beendet eine Gangwechselsteuerung entsprechend abtriebsreduzierender Kennlinien zeitlich optimal.

Eine weitere vorteilhafte Weiterbildung der Erfindung ist der Gegenstand des Patentanspruchs 3.

Bei hoher Fahrzeugbeschleunigung wird die Gangwechselsteuerung entsprechend der abtriebsmomentreduzierenden Schaltkennlinien sofort beendet.
Diese erfindungsgemäße Weiterbildung geht davon aus, daß bei einer hohen Fahrzeugbeschleunigung eine Fahrbahn mit hohem Reibwert Voraussetzung ist. Mit dieser erfindungsgemäßen Weiterbildung wird die Gangwechselsteuerung entsprechend der abtriebsmomentreduzierenden Schaltkennlinien frühestmöglich beendet.

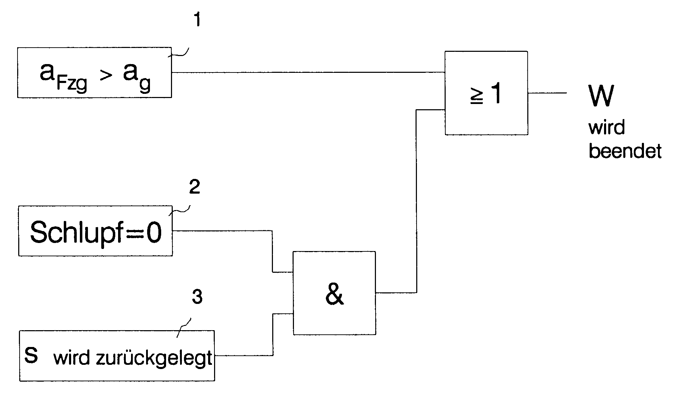

In der Zeichnung ist ein Ausführungsbeispiel der Erfindung dargestellt. Die einzige Figur zeigt eine logische Schaltanordnung, die die Bedingungen zum Beenden der Gangwechselsteuerung entsprechend der abtriebsmomentreduzierenden Schaltkennlinien, hier des Winterprogramms, gemäß der Erfindung darstellt.

Ein Bedingungsblock 1 ist mit dem ersten Eingang eines logischen ODER-Gliedes verbunden. Am zweiten Eingang des logischen ODER-Gliedes ist der Ausgang eines logischen UND-Gliedes angeschlossen. An die zwei Eingänge des logischen UND-Gliedes führen die Ausgangssignale eines Bedingungsblocks 2 und eines Bedingungsblocks 3.

Das Signal am Ausgang des logischen ODER-Gliedes bestimmt, ob das durch die Durchdrehneigung der angetriebenen Räder aktivierte Winterprogramm W beibehalten oder wieder beendet wird. Das Winterprogramm W wird beendet, wenn entweder die Bedingung des Bedingungsblockes 1 oder alle Bedingungen der Bedingungsblöcke 2 und 3 erfüllt sind. Andernfalls wird das Winterprogramm W zur Reduzierung des Abtriebsmoments beibehalten.

Nach der Bedingung des Bedingungsblockes 1 wird das Winterprogramm W sofort beendet, wenn die Fahrzeugbeschleunigung a_{Fzg} größer als die Fahrzeuggrenzbeschleunigung a_{g} ist. Bei der Fahrzeuggrenzbeschleunigung a_{g} handelt es sich um eine Fahrzeugbeschleunigung a_{Fzg}, die nur bei einer Fahrbahn mit hohem Reibwert möglich ist. Das Durchfahren einer vorgegebenen Wegstrecke s ist also nicht nötig, wenn die Bedingung des Bedingungsblockes 1 erfüllt ist.
Andernfalls müssen zum Beenden des Winterprogramms W die zwei Bedingungen gemäß der Bedingungsblöcke 2 und 3 erfüllt werden. Diese Bedingungen fordern, daß während des Durchfahrens der vorgegebenen Wegstrecke s (vgl. Bedingungsblock 3) keine Durchdrehneigung (Schlupf=0) der angetriebenen Räder (vgl. Bedingungsblock 2) auftreten darf, um das Winterprogramm W zu beenden.

## Patentansprüche

1. Verfahren zur Reduzierung des Abtriebsmoments bei Durchdrehneigung der angetriebenen Räder in Kraftfahrzeugen mittels eines elektronisch gesteuerten Automatikgetriebes, durch dessen Steuergerät die Gangwechsel bei Durchdrehneigung der angetriebenen Räder entsprechend abtriebsmomentreduzierender Schaltkennlinien gesteuert werden,
dadurch gekennzeichnet, daß die Gangwechselsteuerung entsprechend der abtriebsmomentreduzierenden Schaltkennlinien beendet wird, wenn nach Ende der Durchdrehneigung der angetriebenen Räder innerhalb einer vorgegebenen Wegstrecke keine erneute Durchdrehneigung auftritt.

2. Verfahren nach Patentanspruch 1,
dadurch gekennzeichnet, daß die Länge der vorgegebenen Wegstrecke während des Durchfahrens dieser Wegstrecke zumindest nahezu umgekehrt proportional zum Abtriebsmoment an den angetriebenen Rädern verändert wird.

3. Verfahren nach Patentanspruch 1 oder 2,
dadurch gekennzeichnet, daß die Gangwechselsteuerung entsprechend der abtriebsmomentreduzierenden Schaltkennlinien sofort beendet wird, wenn die Fahrzeugbeschleunigung einen bestimmten Grenzwert überschritten hat.

## Claims

1. A method whereby, when the driven wheels of vehicles tend to slip, the driving torque is reduced by an electronically controlled automatic transmission system having a control device which, when the driven wheels tend to slip, controls the gear change in accordance with driving-torque reducing shift characteristics, characterised in that the gear-change control in accordance with the driving-torque reducing shift characteristics is switched off if no new tendency to slip occurs within a preset distance after the end of the tendency of the driven wheels to slip.

2. A method according to claim 1, characterised in that the length of the preset distance is altered during travel through this distance, at least approximately in inverse proportion to the driving torque on the driven wheels.

3. A method according to claim 1 or 2, characterised in that the gear-change control in accordance with the driving-torque reducing shift characteristics is switched off as soon as the vehicle acceleration exceeds a given limiting value.

## Revendications

1. Procédé pour réduire le couple de sortie d'un véhicule à moteur au cas ou ses roues motrices ont tendance à patiner, au moyen d'une boîte de vitesses automatique, commandée de façon électronique, par l'appareil de commande par lequel on commande le changement des vitesses dans le cas où les roues entraînées ont tendance à patiner en fonction des courbes caractéristiques de réduction du couple de sortie, procédé caractérisé en ce qu'on met fin à la commande du changement des vitesses en fonction des courbes caractéristiques de changement des vitesses pour réduire le couple de sortie, quand après la fin de la tendance des roues entraînées à patiner, il ne se produit pas de nouvelle tendance au patinage à l'intérieur d'un trajet prédéfini.

2. Procédé selon la revendication 1, caractérisé en ce que la longueur du trajet prédéfini est modifiée pendant le parcours de ce trajet au moins de façon presqu'inversement proportionnelle au couple de sortie sur les roues motrices.

3. Procédé selon la revendication 1 ou 2, caractérisé en ce qu'on met fin immédiatement à la commande du changement des vitesses en fonction des courbes caractéristiques de changement de vitesses réduisant le couple de sortie, quand l'accélération du véhicule a dépassé une valeur limite déterminée.
